# EUROPÄISCHE PATENTSCHRIFT

(11) **EP 2 331 370 B1**
(45) Veröffentlichungstag und Bekanntmachung des Hinweises auf die Patenterteilung: **11.11.2015**
(21) Anmeldenummer: 09782561.6
(22) Anmeldetag: 03.09.2009
(51) Int. Cl.: B60S 1/18, B60S 1/24

(54) **ANTRIEBSVORRICHTUNG**
DRIVE DEVICE
DISPOSITIF D'ENTRAÎNEMENT

(30) Priorität: 09.10.2008 DE 102008042707
(43) Veröffentlichungstag der Anmeldung: 15.06.2011
(73) Patentinhaber: Robert Bosch GmbH, 70442 Stuttgart (DE)
(72) Erfinder: MAYER, Stephan, 77855 Achern (DE); RITT, Jean-Marc, F-67000 Strasbourg (FR)
(86) Internationale Anmeldenummer: PCT/EP2009/061401
(87) Internationale Veröffentlichungsnummer: WO 2010/040604

(56) Entgegenhaltungen:
- DE-A1- 19 908 284
- DE-A1-102006 061 632
- DE-T2- 69 609 918
- FR-A1- 2 873 077

## Beschreibung

Die Erfindung betrifft eine Antriebsvorrichtung für eine Scheibenwischeinrichtung, sowie eine Scheibenwischereinrichtung für ein Kraftfahrzeug.

### Stand der Technik

Bei Fahrzeugen mit Gegenlaufwischanlagen mit großen Frontscheiben kommen in der Regel Zweimotorenwischeranlagen zum Einsatz, wobei im Wesentlichen Reversiermotoren mit einem konventionellen Gestänge zwischen einem oszillierenden Motor und einer Abtriebswelle eingesetzt werden. So ist beispielsweise aus der DE 10 2006 042 322 A1 eine Scheibenwischeranlage mit einem Scheibenwischerantrieb und einer Getriebeanordnung zum Antrieb einer Wischerwelle bekannt, bei der eine pendelnde Drehbewegung in der Wischerwelle dadurch erzeugt wird, dass eine Schnecke als Schubstange vorgesehen ist, welche über eine exzentrische und gelenkige Verbindung mit einem Schneckenrad verbunden ist. Als nachteilig erweist sich hierbei, dass durch das voluminöse Schneckenrad und die erzeugte Hub- Pendelbewegung der Schubstange ein erheblicher Einbauraum erforderlich ist, wodurch eine flexible Verwendung in verschiedenen Kraftfahrzeugmodellen erschwert wird.

Eine Antriebsvorrichtung mit den Merkmalen des Oberbegrifs des Anspruchs 1 ist aus der DE102006061632 bekannt.

### Offenbarung der Erfindung

Es ist die Aufgabe der Erfindung, eine Antriebsvorrichtung für einen Scheibenwischer sowie eine Scheibenwischeinrichtung für ein Kraftfahrzeug zu schaffen, die eine kompakte Bauweise aufweist und universell eingesetzt werden kann.

Die Lösung der Aufgabe erfolgt erfindungsgemäß durch eine Antriebsvorrichtung für eine Scheibenwischeinrichtung mit den Merkmalen des Anspruchs 1 sowie eine Scheibenwischeinrichtung für ein Kraftfahrzeug mit den Merkmalen des Anspruchs 6. Weitere Vorteile und vorteilhafte Ausgestaltungen der erfindungsgemäßen Vorrichtung sind der Beschreibung, den Zeichnungen und den Patentansprüchen zu entnehmen.

Die erfindungsgemäße Antriebsvorrichtung für eine Scheibenwischereinrichtung zur Bewegung einer Abtriebswelle, mit dessen Hilfe insbesondere eine Scheibenwischeinrichtung eines Kraftfahrzeugs angetrieben werden kann, weist eine über einen Motor antreibbare Antriebswelle auf, welche drehfest mit einem Linearbewegungselement verbunden ist. Erfindungsgemäß ist das Linearbewegungselement über genau eine Koppel und genau eine Schwinge mit der Abtriebswelle verbunden, wobei die Koppel wiederum gelenkig zwischen dem Linearbewegungselement und der Schwinge gelagert und die Schwinge drehfest mit der Abtriebswelle verbunden ist. Dabei kann die Antriebswelle vorzugsweise als Spindel- oder Schneckengewinde und das Linearbewegungselement als Spindelmutter ausgebildet sein, so dass durch die Verwendung des Linearführungselementes die Rotationsbewegung der Antriebswelle in eine Linearbewegung und mittels Schwinge und Koppel wieder in eine Drehbewegung an der Abtriebswelle umgesetzt werden kann. Ferner kann auf diese Weise der Achsversatz reduziert und der benötigte Raum für die Antriebsvorrichtung reduziert werden.

In einer besonders bevorzugten Ausführungsform kann die Antriebswelle in nur einem definierten Teilbereich als Schnecke ausgebildet sein, so dass die Wellenlänge der Antriebswelle unabhängig von der Wellenlänge der Abtriebswelle gewählt werden kann und sowohl eine kurze als auch eine lange Abtriebswellenlänge realisierbar ist. Vorteilhafterweise ist der Weg des Linearbewegungselementes individuell festlegbar, so dass der Raumbedarf der Antriebsvorrichtung an den zur Verfügung stehenden Raum im Motor und an die Anzahl der Wischerarme angepasst werden kann.

Vorzugsweise sind die Länge der Koppel und/oder die Länge der Schwinge und/oder die Steigung der Antriebswelle variabel festlegbar, so dass das Übersetzungsverhältnis der Antriebsvorrichtung an deren Verwendung angepasst und entsprechend optimiert werden kann. Auf diese Weise ist es möglich eine Antriebsvorrichtung mit einer länglichen Bauform und variablen Bauteilabmessungen bereitzustellen, welche leistungsfähig ist und flexibel in die Kraftfahrzeugbauräume eingesetzt werden kann.

Vorteilhafterweise ist die Antriebsvorrichtung im Ruhezustand selbsthemmend. Dies ist erwünscht, da dem Motor im Ruhezustand kein Strom zugeführt wird und somit die Antriebsstange ohne ausreichende Selbsthemmung frei drehbar wäre, wobei die Gefahr bestehen würde, dass die Antriebsstange durch die Einleitung eines Drehmomentes, beispielsweise durch Fahrtwind, in Rotation versetzt und dadurch der Wischerarm in das Sichtfeld des Fahrzeugführers bewegt werden könnte. Der Wischwinkel des Wischarms kann individuell eingestellt werden, wobei Einstellungen sowohl über die Abtriebswelle in Form eines Winkelgebers als auch über die Antriebswelle in Form eines Lineargebers möglich sind.

Besonders vorteilhaft kann ein definierte Teilbereich der Antriebswelle austauschbar sein, wobei der definierte Teilbereich der Antriebswelle als Spindel oder Schnecke ausgebildet sein kann und je nach Ausführungsform unterschiedliche Durchmesser und/oder Längen und/oder Gewinde, bzw. Gewindesteigungen aufweist, so dass die Antriebsvorrichtung, bzw. die jeweilige Antriebswelle der Antriebsvorrichtung variable an die vorbestimmte Verwendung, beispielsweise an ein Kraftfahrzeug, anpassbar ist.

Vorzugsweise kann der Motor als Reversiermotor ausgestaltet sein, welcher über eine Elektronik regelbar ist, so dass der Motor in unterschiedlichen Drehrichtungen entsprechend der pendelnden Bewegung des Wischerblattes steuerbar ist. In einer bevorzugten Ausführungsform kann die Antriebsvorrichtung eine Sensoreinrichtung zur Überwachung und Steuerung der Scheibenwischereinrichtung aufweisen. Dabei kann eine elektronische Steuerung vorgesehen sein, die beispielsweise bei eingeschaltetem Motor den Eingang von Sensorsignalen erfasst, um die Drehrichtung des Motors entsprechend umschalten zu können. Auf diese Weise kann die Linearbewegung des Linearbewegungselementes und/oder die Radialbewegung des Abtriebelementes ermittelt und, je nach Ausführungsform des Kraftfahrzeugs, entsprechend eingestellt, bzw. angepasst werden, so dass sowohl der Wischwinkel als auch die Wischgeschwindigkeit oder die Parkposition des Wischerarmes über die Sensoreinrichtung und die elektronische Steuerung individuell regelbar ist und somit auch die Getriebegröße durch eine individuelle Anpassung der Antriebswelle entsprechend flexibel ausgelegt werden kann. Ferner ist denkbar, dass anhand des zurückgelegten Weges des Linearbewegungselementes oder der Winkelbewegung des Abtriebelementes der Wischwinkel im Wischerbereich ermittelt und variabel eingestellt werden kann. Mit Hilfe einer derartigen der Sensoreinrichtung und/oder durch einen derartigen Reversiermotor kann sowohl die Länge des Wischarmes als auch die Länge des Abtriebelementes variabel eingestellt und der Wirkungsbereich der Scheibenwischeinrichtung erweitert werden.

Die Antriebsvorrichtung kann vorteilhafterweise derart in den Einbauraum eingebaut werden, dass die Abtriebswelle geschützt ist und Einwirkungen von außen weitestgehend verhindert werden können.

Die Erfindung betrifft ferner eine Scheibenwischeinrichtung mit einer Antriebsvorrichtung und ein Kraftfahrzeug mit einer Scheibenwischeinrichtung, wobei die Abtriebswelle drehfest mit mindestens einem Wischerarm verbunden ist.

### Kurze Beschreibung der Zeichnungen

Nachfolgend wird die Erfindung unter Bezugnahme auf die anliegenden Zeichnungen anhand eines bevorzugten Ausführungsbeispiels näher erläutert. Dabei ist zu beachten, dass die Figuren nur einen beschreibenden Charakter haben und nicht dazu gedacht sind, die Erfindung in irgendeiner Form einzuschränken.

Es zeigen:
- Fig. 1a: eine perspektivische schematische Ansicht einer erfindungsgemäßen Antriebsvorrichtung in einer Ausgangsposition.
- Fig. 1b: eine perspektivische schematische Ansicht einer erfindungsgemäßen Antriebsvorrichtung in einer Mittelposition.
- Fig. 1c: eine perspektivische schematische Ansicht einer erfindungsgemäßen Antriebsvorrichtung in einer Umkehrposition.
- Fig. 2: eine schematische Ansicht einer erfindungsgemäßen Antriebsvorrichtung mit Gehäusedeckel.

### Beschreibung der Abbildungen

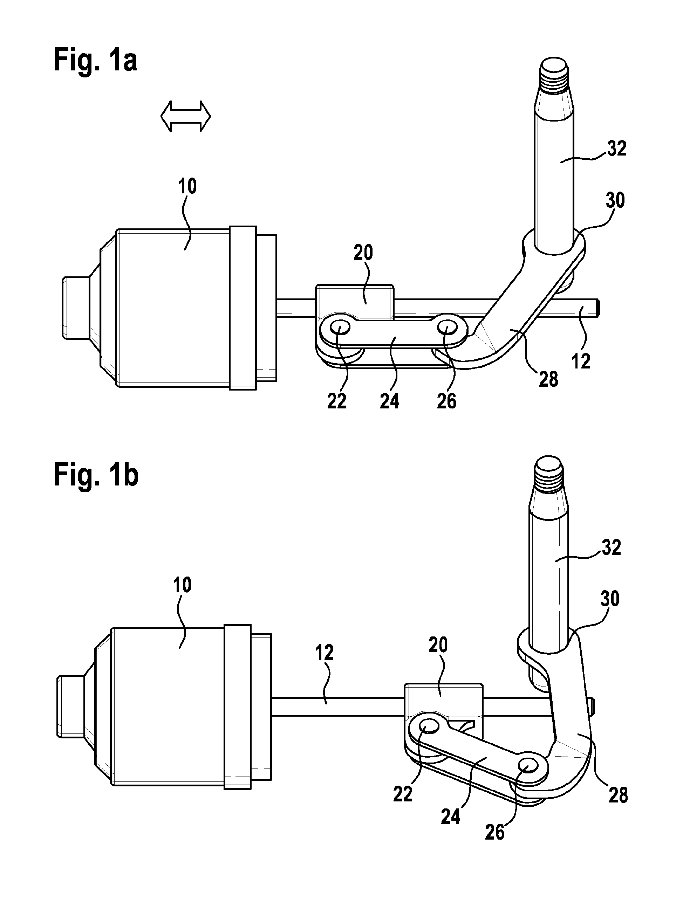

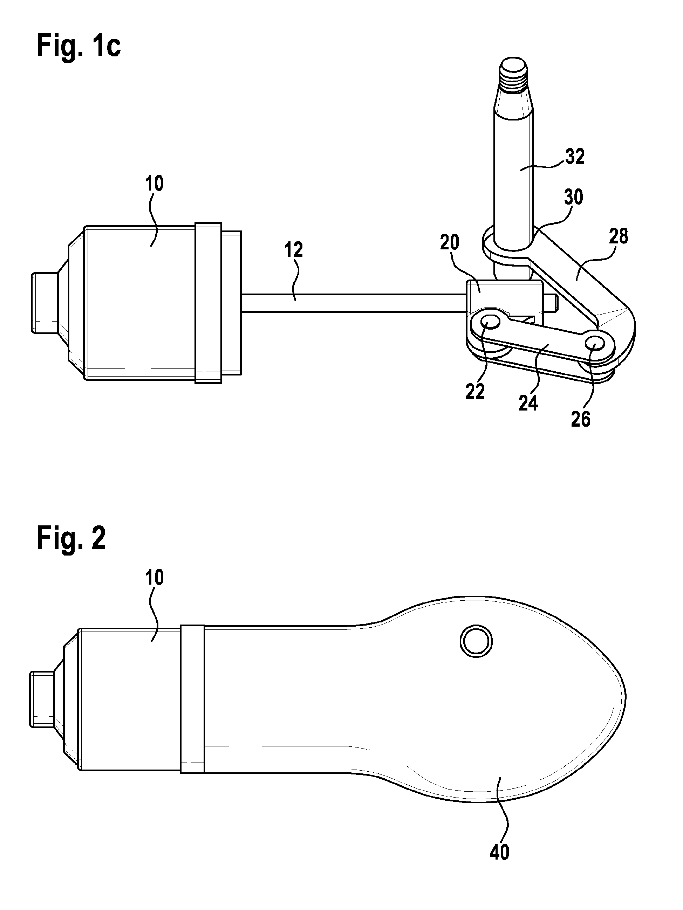

In Figur 1a bis 1c ist eine erfindungsgemäße Antriebsvorrichtung für eine Scheibenwischereinrichtung zur Bewegung einer Abtriebswelle 32 dargestellt. Dabei treibt ein Motor 10, vorzugsweise eine Reversiermotor, eine drehbar gelagerte Antriebswelle 12 an, welche vorzugsweise als Spindel- oder Schneckengewinde ausgebildet ist. Die Antriebswelle 12 ist drehfest mit einem Linearbewegungselement 20 verbunden, so dass eine Rotationsbewegung der Antriebswelle 12 in eine Linearbewegung des Linearbewegungselementes 20 umgesetzt werden kann. Das Linearbewegungselement 20 ist über ein erstes Gelenk 22 mit einer Koppel 24 verbunden, wobei die Koppel 24 über ein zweites Gelenk 26 mit einer Schwinge 28 und die Schwinge 28 über eine Hohlbohrung 30 drehfest mit einer Abtriebswelle 32 verbunden ist. Das Linearbewegungselement 20 wird über die Antriebswelle 12 vom Motor 10 angetrieben und bewegt sich in einer Linearbewegung auf der Antriebswelle 12 zwischen dem Motor 10 und der Abtriebswelle 32 hin und her (Fig. 1a bis Fig. 1c). Dabei wird die Linearbewegung des Linearbewegungselementes 20 über die gelenkige Lagerung der Koppel 24 in eine Rotationsbewegung der Schwinge 28 umgesetzt, so dass die Schwinge 28 diese Rotationsbewegung über die drehfest verbundene Abtriebswelle 32 entweder direkt oder indirekt an mindestens einen nicht dargestellten Wischerarm abgegeben werden kann.

Fig. 2 zeigt die erfindungsgemäße Antriebsvorrichtung mit einem passenden Gehäusedeckel 40.

Ein weiterer Gegenstand der vorliegenden Erfindung ist eine Scheibenwischeinrichtung mit einer Antriebsvorrichtung und ein Kraftfahrzeug mit einer Scheibenwischeinrichtung, wobei die Abtriebswelle drehfest mit mindestens einem Wischerarm verbunden ist.

## Patentansprüche

1. Antriebsvorrichtung für eine Scheibenwischereinrichtung zur Bewegung einer Abtriebswelle (32), mit
einer über einen Motor (10) antreibbaren Antriebswelle (12),
wobei die Antriebswelle (12) derart mit einem Linearbewegungselement (20) verbunden ist, dass eine Rotationsbewegung der Antriebswelle (12) in eine Linearbewegung des Linearbewegungselementes (20) umgesetzt wird, wobei das Linearbewegungselement (20) über genau eine Koppel (24) und genau eine Schwinge (28) mit einer Abtriebswelle (32) verbunden ist, wobei die Koppel (24) gelenkig zwischen dem Linearbewegungselement (20) und der Schwinge (28) gelagert ist und die Schwinge (28) drehfest mit der Abtriebswelle (32) verbunden ist,
**dadurch gekennzeichnet, dass**
die Antriebswelle (12) in einer Aufsicht zwischen der Abtriebswelle (32) und einem Gelenk (26) zwischen Koppel (24) und Schwinge (28) angeordnet ist.

2. Antriebsvorrichtung nach Anspruch 1, **dadurch gekennzeichnet, dass** die Antriebswelle (12) nur in einem definierten Teilbereich als Schnecke ausgebildet ist.

3. Antriebsvorrichtung nach Anspruch 2, **dadurch gekennzeichnet, dass** der definierte Teilbereich der Antriebswelle (12) austauschbar ist.

4. Antriebsvorrichtung nach einem der Ansprüche 1 bis 3, **dadurch gekennzeichnet, dass** der Motor (10) als Reversiermotor ausgestaltet ist.

5. Antriebsvorrichtung nach einem der vorhergehenden Ansprüche, **dadurch gekennzeichnet, dass** eine Sensoreinrichtung zur Überwachung und Steuerung der Scheibenwischereinrichtung vorgesehen ist.

6. Scheibenwischeinrichtung mit einer Antriebsvorrichtung nach einem der Ansprüche 1 bis 5, **dadurch gekennzeichnet, dass** die Abtriebswelle (32) drehfest mit mindestens einem Wischerarm verbunden ist.

7. Kraftfahrzeug, umfassend eine Scheibenwischeinrichtung nach Anspruch 6 mit einer Antriebsvorrichtung nach einem der Ansprüche 1 bis 5.

## Claims

1. Drive device for a windshield wiper device for moving an output shaft (32), with
a drive shaft (12) which can be driven via a motor (10),
wherein the drive shaft (12) is connected to a linear movement element (20) in such a way that a rotational movement of the drive shaft (12) is converted into a linear movement of the linear movement element (20), wherein the linear movement element (20) is connected to an output shaft (32) via precisely one coupling rod (24) and precisely one oscillating crank (28), the coupling rod (24) being mounted in an articulated manner between the linear movement element (20) and the oscillating crank (28), and the oscillating crank (28) being connected to the output shaft (32) in a rotationally fixed manner,
**characterized in that**
the drive shaft (12) in a top view is arranged between the output shaft (32) and a joint (26) between coupling rod (24) and oscillating crank (28).

2. Drive device according to Claim 1, **characterized in that** the drive shaft (12) is designed as a worm only in a defined sub region.

3. Drive device according to Claim 2, **characterized in that** the defined sub region of the drive shaft (12) is interchangeable.

4. Drive device according to one of Claims 1 to 3, **characterized in that** the motor (10) is configured as a reversing motor.

5. Drive device according to one of the preceding claims, **characterized in that** a sensor device is provided for monitoring and controlling the windshield wiper device.

6. Windshield wiper device with a drive device according to one of Claims 1 to 5, **characterized in that** the output shaft (32) is connected to at least one wiper arm in a rotationally fixed manner.

7. Motor vehicle comprising a windshield wiper device according to Claim 6 with a drive device according to one of Claims 1 to 5.

## Revendications

1. Dispositif d'entraînement pour un dispositif d'essuie-glace pour le mouvement d'un arbre de sortie (32), comprenant
un arbre d'entraînement (12) pouvant être entraîné par le biais d'un moteur (10),
l'arbre d'entraînement (12) étant relié à un élément à mouvement linéaire (20) de telle sorte qu'un mouvement de rotation de l'arbre d'entraînement (12) soit transformé en un mouvement linéaire de l'élément à mouvement linéaire (20),
l'élément à mouvement linéaire (20) étant relié à un arbre de sortie (32) par le biais d'exactement une bielle (24) et exactement un bras oscillant (28), la bielle (24) étant montée de manière articulée entre l'élément à mouvement linéaire (20) et le bras oscillant (28), et le bras oscillant (28) étant relié de manière solidaire en rotation à l'arbre de sortie (32),
**caractérisé en ce que**
l'arbre d'entraînement (12) est disposé, dans une vue de dessus, entre l'arbre de sortie (32) et une articulation (26) entre la bielle (24) et le bras oscillant (28).

2. Dispositif d'entraînement selon la revendication 1, **caractérisé en ce que** l'arbre d'entraînement (12) est réalisé sous forme de vis sans fin uniquement dans une région partielle définie.

3. Dispositif d'entraînement selon la revendication 2, **caractérisé en ce que** la région partielle définie de l'arbre d'entraînement (12) est remplaçable.

4. Dispositif d'entraînement selon l'une quelconque des revendications 1 à 3, **caractérisé en ce que** le moteur (10) est configuré en tant que moteur réversible.

5. Dispositif d'entraînement selon l'une quelconque des revendications précédentes, **caractérisé en ce qu'**un dispositif de capteur est prévu pour la surveillance et la commande du dispositif d'essuie-glace.

6. Dispositif d'essuie-glace comprenant un dispositif d'entraînement selon l'une quelconque des revendications 1 à 5, **caractérisé en ce que** l'arbre de sortie (32) est relié de manière solidaire en rotation à au moins un bras d'essuie-glace.

7. Véhicule automobile, comportant un dispositif d'essuie-glace selon la revendication 6 comprenant un dispositif d'entraînement selon l'une quelconque des revendications 1 à 5.
